# EUROPÄISCHE PATENTANMELDUNG

(11) **EP 2 256 717 A1**
(43) Veröffentlichungstag der Anmeldung: **01.12.2010**
(21) Anmeldenummer: 10002213.6
(22) Anmeldetag: 04.03.2010
(51) Int. Cl.: G09F 23/00, A01G 9/02, A01G 31/00, A01G 5/00

(54) **Als Pflanzsystem ausgebildeter Geschenkartikel**

(30) Priorität: 26.05.2009 DE 202009007480 U
(71) Anmelder: emotion factory GmbH, 71665 Vaihingen/Enz (DE)
(72) Erfinder: Dennig, Jörg, 71665 Vaihingen/Enz (DE)
(74) Vertreter: Munk, Ludwig

(57) **Zusammenfassung**

Die Erfindung betrifft einen als Pflanzsystem ausgebildeten Geschenkartikel (1) mit einem aus einem wasserdichten Leichtmaterial bestehenden Körper (2). Der Körper (2) ist dabei mit einer von seiner Oberseite ausgehenden Vertiefung (4) zur Aufnahme von Nährbodensubstrat (5) und Samen (6) versehen und in einem seiner Form angepassten Aufnahmebehälter (3) aufgenommen. Der Aufnahmebehälter (3) weist einen entfernbaren Deckel (9) zum Abdecken der Vertiefung (4) und wenigstens eine äußere Fläche auf, die bedruckbar ausgebildet ist.

## Beschreibung

Die Erfindung betrifft einen als Pflanzsystem ausgebildeten Geschenkartikel.

Werbemittel bzw. kleine Geschenkartikel müssen kostengünstig, schnell und einfach herstellbar sein, da sie an Kunden oder zu beschenkende Personen meist kostenfrei abgegeben werden. Dies erfordert auch, dass das Werbemittel bzw. der Geschenkartikel eine Einheit bildet, so dass dieser Gegenstand sogleich vom Beschenkten verwendet werden kann, ohne dass ein vorheriges Zusammenbauen oder Kombinieren von separaten Teilen notwendig ist. Werbegeschenke aus separaten Gegenständen, die der Beschenkte erst zusammenfügen muss, damit er das passende Werbemittel bzw. den Geschenkartikel erhält, erweisen sich als umständlich und nicht werbewirksam genug.

Aus der EP 0 407 264 A1 ist beispielsweise ein Würfel für die Anzucht von Pflanzen in Hydroponik bekannt. Hydroponik ist eine Technik, bei der Kulturen in erdlosen Substraten wie Steinwolle angezogen bzw. gezüchtet werden. Der hier besagte Würfel besteht dabei aus Glasfasern, bei dem die Fasern durch ein Bindemittel miteinander verbunden sind und an den Seitenflächen mit einer wasserundurchlässigen Folie, beispielsweise Polyethylen, umhüllt ist. Der Glasfaserwürfel weist im mittleren Bereich eine Öffnung auf, in die ein Pfropfen mit dem Samen eingebracht wird. Der Pfropfen besteht hier ebenfalls aus Glasfasern. Die Wurzeln des angezogenen Stecklings können sich dann im gesamten Würfelkörper ausbreiten. Nachteilig bei diesem Pflanzwürfel ist allerdings, dass er als Werbemittel nicht besonders geeignet ist, da der Würfel keinen Boden und keinen Deckel aufweist und zudem noch der Samen und der Pfropfen einzeln verpackt werden müssen. Denn ohne Deckel und Boden wirkt der Würfel sehr unästhetisch auf die zu beschenkende Person, die zum Würfel noch den Samen und den Pfropfen erhält, was zudem noch sehr anwenderunfreundlich ist.

Hiervon ausgehend ist es daher Aufgabe der Erfindung ein verschickbares, ein

Pflanzengeschenk enthaltenden Geschenkartikel zu schaffen, der als Werbemittel geeignet ist.

Erfindungsgemäß wird diese Aufgabe durch die Merkmale des Anspruchs 1 gelöst.

Ein erfindungsgemäßer als Pflanzsystem ausgebildeter Geschenkartikel weist einen aus einem wasserdichten Leichtmaterial bestehenden Körper auf, der mit einer von seiner Oberseite ausgehenden Vertiefung zur Aufnahme von Nährbodensubstrat und/oder Samen versehen ist, die bereits vor dem allgemeinen Verpacken des Geschenkartikels in die Vertiefung eingebracht werden können. Auf diese Weise wird vor dem Verpacken bereits eine Pflanzeinheit gebildet. Der Körper ist ferner in einem seiner Form angepassten Aufnahmebehälter aufgenommen, der einen entfernbaren Deckel, vorteilhaft einen Abreißdeckel, zum Abdecken der Vertiefung und wenigstens eine äußere Fläche aufweist, die bedruckbar ausgebildet ist. Durch die vollständige Aufnahme des Körpers in dem Aufnahmebehälter, der durch den entfernbaren Deckel die Vertiefung nach oben hin abschließt, wird ein nach allen Seiten hin verschlossener Geschenkartikel geschaffen, der im Inneren das Nährbodensubstrat und den Samen enthält und durch die Geschlossenheit mit einfachen Mitteln weiter verpackt und platzsparend transportiert werden kann. Wenn die zu verschenkende Pflanze noch nicht herangezogen wurde, sondern nur als Samen vorliegt, kann nun mit dem erfindungsgemäßen Geschenkartikel die Anwenderfreundlichkeit erhöht werden, da gleichfalls das Nährbodensubstrat und das Anzuchtgefäß als eine Einheit mitverschenkt werden. Der zu beschenkenden Person braucht daher nur ein einzelner, alle erforderlichen Teile enthaltender Gegenstand überreicht zu werden.

Der Deckel des Aufnahmebehälters kann zudem durch seine vorteilhafte Abreißfunktion leicht und ohne Hilfsmittel von der Vertiefung entfernt werden. Vorteilhaft kann der Deckel dabei nur im Bereich der Vertiefung vorgesehen sein, oder sich aber auch über die gesamte obere Seite des Körpers erstrecken. Ist dies der Fall dann könnte ein Hochklappen und Abreißen im Bereich des Übergangs von Oberseite zu Seitenfläche vorgesehen sein.

Zudem kann der gesamte Geschenkartikel vorteilhaft kostengünstig transportiert und hergestellt werden, da der Körper aus einem Leichtmaterial, vorteilhafterweise aus geschäumtem Kunststoff, hergestellt wird. Insbesondere ist dafür Styropor geeignet, da dies sehr leicht ist und mit einfachen Mitteln herstellbar ist. Zudem kann hier die Vertiefung zur Aufnahme des Nährbodensubstrats und des Samens durch einfaches Ausschneiden eingebracht werden. Zum Heranziehen der Pflanze benötigt diese Wasser, das in die Vertiefung eingegeben werden muss. Damit dies nicht aus dem Geschenkartikel herauslaufen kann und gegebenenfalls auch gleichzeitig Nährbodensubstrat mit sich nimmt, muss der Körper bzw. das Leichtmaterial des Körpers wasserundurchlässig sein.

Weiterhin kann durch die Bedruckbarkeit wenigstens einer Fläche des Aufnahmebehälters, vorteilhaft aller sichtbaren Flächen, ein Werbemittel geschaffen werden, das eine Firma oder Person zum Werben für sich einsetzen und so bei verschiedensten Personengruppen ihren Bekanntheitsgrad erhöhen kann. So können z.B. nicht nur Firmen- bzw. Personendaten auf Flächen des Aufnahmebehälters aufgedruckt werden, sondern selbstverständlich auch Informationen über die im als Pflanzsystem ausgebildeten Geschenkartikel bei entsprechender Behandlung züchtbare Pflanze. In diesem Fall kann der Geschenkartikel anstatt als Werbemittel als kleines Freundschaftsgeschenk, Gastgeschenk oder einfach nur als "Mitbringsel" dienen.

In einer weiteren vorteilhaften Ausgestaltung kann vorgesehen sein, dass das in der Vertiefung aufgenommene Nährbodensubstrat als flacher, trockener Quellkörper ausgebildet ist, der eine Ausnehmung zur Aufnahme des Samens aufweist. Das als Quellkörper ausgebildete Nährbodensubstrat und der Samen bilden zusammen einen Block, der zur Anzucht der Pflanze nur noch durch Hinzufügen von Wasser aufquellen muss, damit das Nährbodensubstrat als dieses für den Samen dienen kann. Das so in seinem Volumen verkleinerte Nährbodensubstrat kann schnell und ohne großen Aufwand in die Vertiefung eingebracht bzw. eingelegt werden. Ein mühsames Einfüllen und Festdrücken von beispielsweise Erde kann auf diese Weise vermieden werden. Zudem kann weiterhin durch die Ausgestaltung als Quellkörper der Verschmutzungsgrad gering gehalten werden. Sollte das als Quellkörper ausgebildete Nährbodensubstrat beim Entfernen bzw. Abreißen des Deckels von dem Aufnahmebehälter aus der Vertiefung des Körpers versehentlich herausfallen, dann ist dies nicht weiter schlimm, so dass man ohne Mühe diesen wieder in die Vertiefung mitsamt dem Samen einbringen kann. Ist das Nährbodensubstrat jedoch als normale handelsübliche Erde ausgebildet, so muss mühevoll die Erde wieder in die Vertiefung eingebracht werden.

Damit das als Quellkörper ausgebildete Nährbodensubstrat nicht immer beim eventuellen Kippen hin- und herbewegt bzw. geschleudert wird, kann vorteilhaft vorgesehen sein, dass das Nährbodensubstrat auf der Bodenfläche der Vertiefung des Körpers befestigt ist.

Weiterhin vorteilhaft kann sein, wenn die äußere Form des Quellkörpers und die Form der Vertiefung im wesentlichen geometrisch ähnlich sind. Das bedeutet, wenn die Vertiefung beispielsweise im Querschnitt rund ausgeführt ist, sollte die äußere Form des Quellkörpers ebenfalls rund ausgeführt sein, damit das Einbringen des Quellkörpers in die Vertiefung leichter vorgenommen werden kann.

In einer weiteren vorteilhaften Ausgestaltung der Erfindung kann ferner vorgesehen sein, dass der Samen in einem Band eingearbeitet ist, das wenigstens ein Samenkorn, vorteilhaft mehrere Samenkörner, aufweist. Das Band kann dann vorteilhaft derart gefaltet, beispielsweise zerknüllt oder eingerollt, werden, dass es in der Ausnehmung des Nährbodensubstrats aufnehmbar ist, so dass es sich dort verklemmen kann. Dadurch kann auf ein zusätzliches Verschließelement zum Abdecken der mit dem Samenband versehenen Ausnehmung verzichtet werden, so dass auch dadurch Kosten eingespart werden können.

Eine weitere vorteilhafte Maßnahme kann darin bestehen, wenn wenigstens zwei nebeneinander angeordnete Körper im Aufnahmebehälter aufgenommen sind, wobei der Aufnahmebehälter wenigstens zwei entfernbare Deckel zum Abdecken der Vertiefungen aufweist. Durch die Aufnahme von mehreren Körpern in einem Aufnahmebehälter kann ein Geschenkartikel geschaffen werden, der Samen unterschiedlicher Pflanzen oder auch gleicher Pflanzen getrennt voneinander beinhaltet, so dass eine Art Pflanzenreihe oder Pflanzengruppe erzielbar bzw. realisierbar ist.

Eine besonders vorteilhafte Ausbildung des als Pflanzsystem ausgebildeten Geschenkartikels kann darin liegen, wenn der Aufnahmebehälter als Faltschachtel ausgebildet ist, die vorzugsweise aus Karton oder Papier herstellbar ist. Da der Körper aus einem wasserundurchlässigen Material besteht, ist Karton oder Papier als kostengünstiges Material daher besonders geeignet. Somit kann auf einfache Weise ein Bogen aus Karton oder Papier mit den entsprechenden Schnitt- und Faltlinien hergestellt werden, der dann zur Bildung des Aufnahmebehälters nur noch entsprechend entlang den Schnitt- und Faltlinien geschnitten und gefaltet wird. Seine Kanten und/oder Flächen können auch zusätzlich noch miteinander verklebt werden, um ein schnelles Lösen der Verbindungen zu verhindern.

Der Körper und der Aufnahmebehälter können dabei vorteilhaft als geometrische Körper, insbesondere als Würfel oder Zylinder, ausgebildet sein. Besonders vorteilhaft ist hierbei, wenn der Körper und der Aufnahmebehälter jeweils Würfel sind, da auf diese Weise eine kostengünstige automatisierte Herstellung erfolgen kann. Zudem kann beim Transport der volle Stauraum genutzt werden, wodurch ein Aneinander- und Übereinanderstapeln ohne Zwischenräume möglich ist.

Weitere vorteilhafte Ausgestaltungen der Erfindung ergeben sich aus den übrigen Unteransprüchen.

Dabei lassen sich die vorstehend genannten und die nachstehend noch zu erläuternden Merkmale der Erfindung nicht nur in der in den Ansprüchen angegebenen Kombination, sondern auch in anderen Kombinationen verwenden, ohne den Rahmen der Erfindung zu verlassen.

Nachstehend wird die Erfindung anhand eines Ausführungsbeispiels unter Bezugnahme auf die Zeichnung näher erläutert.

Es zeigen:
- Figur 1: ein erfindungsgemäßer als Pflanzsystem ausgebildeter Geschenkartikel in perspektivischer Ansicht;
- Figur 2: einen Längsschnitt durch den Geschenkartikel; und
- Figur 3: einen Längsschnitt durch einen mehrere Körper aufweisenden Geschenkartikel gemäß der Erfindung.

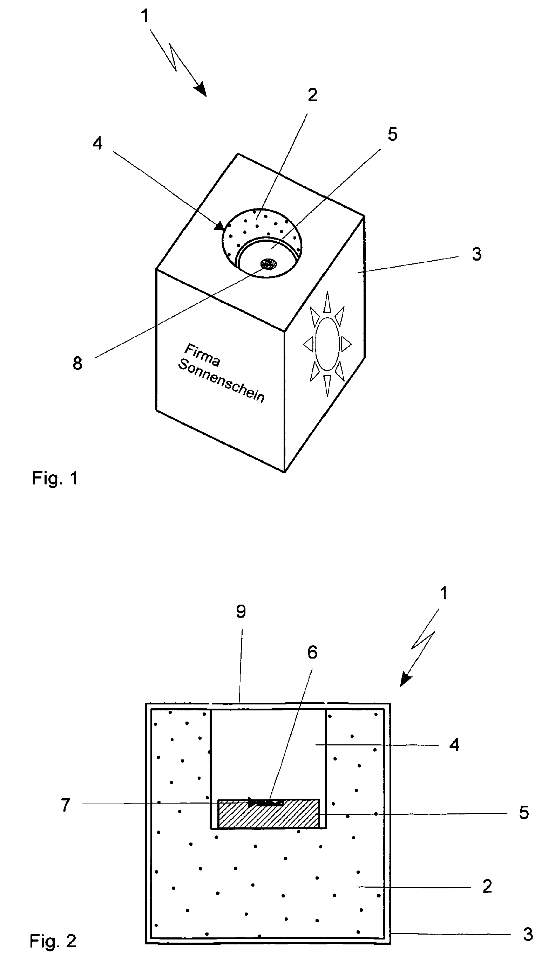

Der insbesondere hier als Werbegeschenk dienende als Pflanzsystem ausgebildete Geschenkartikel 1 gemäß Figur 1 ist hier insgesamt als ein geometrischer Körper, nämlich als Würfel ausgebildet und weist einen Körper 2 auf, der in einem Aufnahmebehälter 3 aufgenommen ist. Der Körper 2 ist aus einem wasserundurchlässigen Leichtmaterial, wie z.B. aus geschäumtem Kunststoff und hier vorteilhaft Styropor, hergestellt, so dass ein insgesamt geringes Gewicht erreicht wird. Dies kommt dem Transport zugute, der dadurch kostensparend vorgenommen werden kann. Zudem kann die Herstellung des vorzugsweise würfelförmigen Körpers 2 aus einem geschäumten Kunststoff mit einfachen Mitteln und ohne großen Aufwand vorgenommen werden, so dass der Geschenkartikel 1 auch als Werbemittel in Frage kommt.

Der Aufnahmebehälter 3 weist eine dem Körper 2 angepasste Form auf, d.h. er ist ebenfalls würfelförmig ausgebildet. Selbstverständlich kann der Körper 2 auch eine andere geometrische Form aufweisen, beispielsweise als Zylinder ausgebildet sein. Dementsprechend sollte dann der Aufnahmebehälter 3 ebenfalls vorteilhaft zylinderförmig ausgebildet sein, ist jedoch allgemein keine Voraussetzung. Der Aufnahmebehälter 3 ist aus Karton hergestellt, kann aber ebenso auch aus Papier oder Kunststoff sein. Er ist dabei als Faltschachtel ausgebildet, die als Bogen mit Schnitt- und Faltlinien hergestellt wird. Der Bogen wird dann entlang den Schnittlinien geschnitten und entlang den Faltlinien derart gefaltet, dass eine dem Körper 2 entsprechend angepasste Faltschachtel entsteht, hier als würfelförmige Faltschachtel dargestellt.

Der Körper 2 des Geschenkartikels 1 weist eine Vertiefung 4 auf, in der Nährbodensubstrat 5 und/oder Samen 6 (hier beides) aufgenommen sind, wie genauer in Figur 2 ersichtlich. Die Vertiefung 4 ist hier im mittleren Bereich in den Körper 2 eingebracht, so dass ausreichend Material im Randbereich bestehen bleibt, wodurch ein leichtes Abbrechen eines Randteils verhindert werden kann. Weiterhin ist die Vertiefung 4 annähernd bis zur Hälfte der Höhe des Körpers 2 in diesem eingebracht.

Das Nährbodensubstrat 5 ist hier als flacher und trockener Quellkörper in Form einer Tablette gepresst und weist eine äußere Form auf, die der Form der Vertiefung 4 entspricht. Wie in Figur 1 erkennbar, ist hier die Vertiefung 4 rund ausgeführt, wobei das Nährbodensubstrat 5 daher ebenfalls in seiner Form rund ausgebildet ist. Es ist natürlich selbstverständlich, dass die Vertiefung 4 auch eine andere Randform aufweisen kann, z.B. eckig, wobei dann das Nährbodensubstrat 5 in seiner Form entsprechend ausgebildet sein oder allgemein eine derartige Form aufweisen sollte, dass dieses in der Vertiefung 4 aufnehmbar ist. Das Nährbodensubstrat 5 besteht aus verdichtetem Substratmaterial, im Allgemeinen Torf, Dünger etc., das durch die relativ große Höhe der Vertiefung 4 ausreichend bei Hinzugabe von Wasser aufquellen kann. Es weist im mittleren Bereich eine Ausnehmung 7 auf, in die der Samen 6 eingebracht ist. Die Ausnehmung 7 ist dabei an einer Oberfläche des Nährbodensubstrats 5 bzw. des Quellkörpers eingebracht, wobei diese nach dem Einlegen des Quellkörpers 5 in die Vertiefung 4 sichtbar sein bzw. in Richtung Öffnung der Vertiefung 4 zeigen sollte. Auf diese Weise kann eine sichere Keimung zwar nicht garantiert, aber dennoch gefördert werden. Da der Samen 6 in der Ausnehmung 7 auf dem trockenen, gepressten Nährbodensubstrat 5 aufliegt, kann keine Keimung erfolgen. Erst durch Hinzufügen von Wasser quillt das Nährbodensubstrat 5 auf, so dass der Samen 6 mit den nötigen Nährstoffen für eine Keimung versorgt ist. Da der Körper 2 aus einem wasserundurchlässigen Material besteht, kann somit das dem Nährbodensubstrat 5 zugeführte Wasser nicht aus dem Geschenkartikel 1 austreten, so dass die Umgebung des Geschenkartikels 1 sauber bleibt und das Wasser der Pflanze zugute kommt. Das Nährbodensubstrat 5 bzw. der Quellkörper kann zudem auf der Bodenfläche der Vertiefung 4 befestigt sein, damit insbesondere beim Transport ein Hin- und Herbewegen des Nährbodensubstrats 5 und des darin aufgenommenen Samens 6 verhindert wird.

Der Samen 6 kann gemäß Figur 2 als ein oder mehrere lose Samenkörner in die Ausnehmung 7 eingebracht werden. Ist dies der Fall, dann ist es vorteilhaft, wenn die Ausnehmung 7 mit einer Klebefolie oder einem anderen Verschließelement abdeckbar ist, damit die losen Samenkörner nicht aus der Ausnehmung 7, insbesondere beim Transport, herausfallen können. Der Samen 6 kann jedoch auch, wie in Figur 1 gezeigt, in einem Band 8 vorzugsweise aus dünnem Papier eingearbeitet sein, das wenigstens ein Samenkorn aufgenommen hat. Das Band 8 besteht dabei aus zwei dünnen Papierlagen, zwischen denen die Samenkörner ungeordnet oder in jeweiligen Abständen angeordnet sind. Das Samenband 8 kann auf einer Rolle als sogenanntes Endlosband vorliegen, von dem ein entsprechender Abschnitt abgeschnitten wird, der danach in die Ausnehmung 7 eingebracht werden kann. Da der hier beschriebene Geschenkartikel 1 hauptsächlich als Werbemittel dienen soll, ist der Grundaufbau immer dergleiche, nämlich der Körper 2 mit dem in seiner Vertiefung 4 aufgenommenen Nährbodensubstrat 5, wobei der Körper 2 vom Aufnahmebehälter 3 umhüllt ist. Es ist lediglich, je nachdem welche Pflanze verschenkt werden soll, der entsprechende Samen 6 in die Ausnehmung 7 vor Umhüllen des Körpers 2 mit dem als Faltschachtel ausgebildeten Aufnahmebehälter 3 einzubringen. Dafür können verschiedene Rollen mit den entsprechenden Samenbändern 8 oder Behälter mit den losen Samenkörnern vorgesehen werden.

Um eine Keimung zu gewährleisten, ist es allerdings sicherer, wenn das Band 8 mehrere Samenkörner beinhaltet. Da das Band 8 dann eine gewisse Länge aufweisen muss und die Ausnehmung 7 vorzugsweise rundlich ausgebildet ist, ist es für eine Aufnahme des Bandes 8 in der Ausnehmung 7 notwendig, das Band 8 entsprechend zu falten oder auch zu zerknüllen, damit es in die Ausnehmung 7 eingesteckt werden kann. Durch das Falten oder Zerknüllen des Bandes 8 kann dieses in der Ausnehmung 7 verklemmt, verhakt oder in diese eingepresst werden, so dass es beispielsweise beim Transport nicht aus der Ausnehmung 7 herausfallen kann. Durch diese Ausgestaltung kann ein Verschließelement wie beim Vorsehen von losen Samenkörnern über der Ausnehmung 7 zum Verschließen dieser entfallen.

Zum Realisieren eines derartigen Werbemittels bzw. Geschenkartikels 1 wird der Körper 2 mit der Vertiefung 4 entsprechend hergestellt, ebenso wie das als Quellkörper ausgebildete Nährbodensubstrat 5. Der entsprechende Samen 6 wird dann in die Ausnehmung 7 des Nährbodensubstrats 5 eingebracht, wobei dieses wiederum in die Vertiefung 4 des Körpers 2 eingesetzt wird. Der Körper 2 wird zusammen mit dem Nährbodensubstrat 5 und dem Samen 6 von dem Aufnahmebehälter 3 vollständig umhüllt, so dass ein Herausfallen des Nährbodensubstrats 5 in Verbindung mit dem Samen 6 aus der Vertiefung 4 insbesondere beim Transport verhindert wird und gleichzeitig eine ästhetische Umhüllung des aus Leichtmaterial hergestellten Körpers 2 geschaffen wird.

Damit der Beschenkte den Geschenkartikel 1 auch als Anzuchteinheit benutzen kann und weiterhin ein ästhetisches Äußeres gewährleistet wird, weist der Aufnahmebehälter 3 einen als vorzugsweise Abreißdeckel ausgebildeten Deckel 9 zum Abdecken der Vertiefung 4 auf, siehe Figur 2. Ein der Vertiefung 4 zugeordneter Karton- bzw. Papierbereich des Aufnahmebehälters 3 kann dabei perforiert vorgesehen sein und somit als Deckel 9 dienen. Durch senkrechten Druck auf diesen Bereich kann der Deckel 9 niedergedrückt und dann leicht vom Rest des Aufnahmebehälters 3 abgerissen werden. Es ist aber auch denkbar, einen Deckel vorzusehen, der sich über die gesamte obere Fläche des Aufnahmebehälters 3 erstreckt und von einem Seitenrand des Aufnahmebehälters 3 abgerissen werden kann.

Der Aufnahmebehälter 3 ist zudem auf wenigstens einer äußeren Fläche bedruckbar ausgestaltet. Soll der Geschenkartikel 1 insbesondere nur als Werbemittel dienen, ist es zweckmäßig, wenn alle sichtbaren Flächen, aber jedoch alle vier Seitenflächen, des würfelförmigen Aufnahmebehälters 3 mit Aufdrucken bedruckbar sind, so dass der Werbende eine möglichst große Fläche zum Werben zur Verfügung hat. Soll der Geschenkartikel 1 nur als kleines "Mitbringsel" dienen, können neben der Gebrauchsanweisung zur Anzucht der Pflanze auch weitere Pflanzendetails oder Aufdrucke auf den Flächen des Aufnahmebehälters 3 aufgedruckt sein. Der Aufdruck kann bereits bei der Herstellung des als Faltschachtel ausgebildeten Aufnahmebehälters 3 durchgeführt werden. Dies erleichtert die allgemeine Herstellung des Geschenkartikels 1.

Vorhergehend wurde ein Geschenkartikel nach einer ersten Ausführungsform beschrieben. Wie oben erläutert, weist der Geschenkartikel 1 nur einen Körper 2 auf, der in dem entsprechend ausgebildeten Aufnahmebehälter 3 aufgenommen ist. Diese Ausführungsform ist beispielsweise für kleinere Geschenkgaben vorteilhaft.

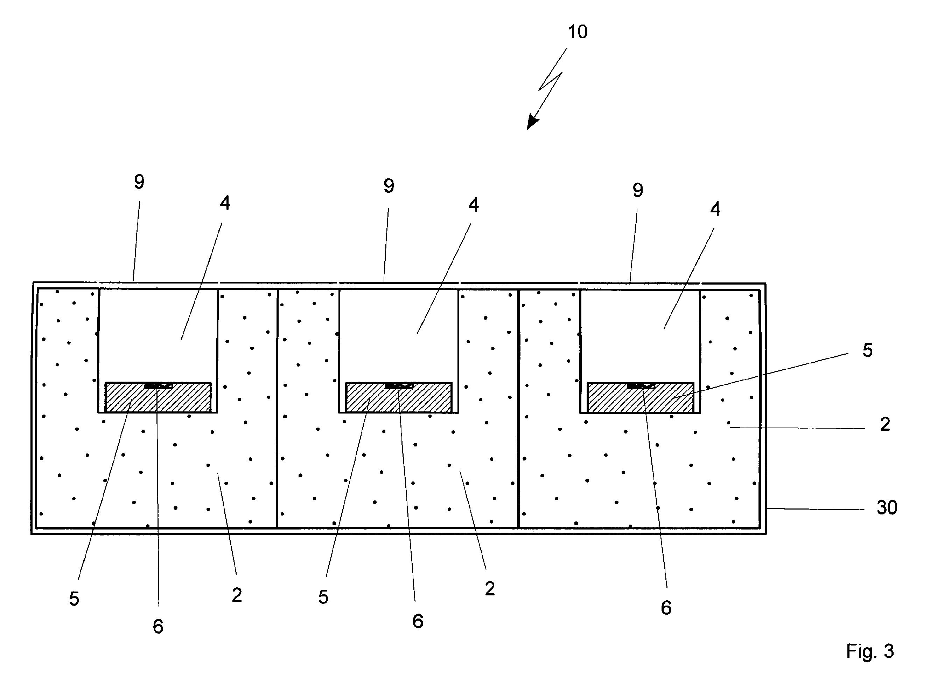

Figur 3 zeigt eine zweite Ausgestaltung des als Pflanzsystem ausgebildeten Geschenkartikels. Der hier dargestellte Geschenkartikel 10 weist mehrere, hier drei, nebeneinander angeordnete Körper 2 auf, die wie bereits oben beschrieben ausgebildet sind. Diese drei Körper 2 sind dabei in einem Aufnahmebehälter 30 aufgenommen, der ebenfalls als Faltschachtel vorzugsweise aus Karton oder Papier, wie zu den Figuren 1 und 2 erläutert, ausgebildet ist. Der Aufnahmebehälter 30 weist nun nicht mehr die Form eines einzelnen Körpers 2 auf, sondern die Form der nebeneinander angeordneten Körper 2, ist hier also rechteckförmig ausgebildet, so dass eine Pflanzenreihe realisiert wird. Es ist natürlich auch möglich, dass der Aufnahmebehälter 20 auch andere Formen aufweisen kann, je nach Anordnung der einzelnen Körper 2 nebeneinander. So ist es beispielsweise möglich, die einzelnen Körper 2 so anzuordnen, dass insgesamt wieder ein Würfel entsteht, so dass der Aufnahmebehälter 20 weiterhin würfelförmig, jedoch in einer anderen Größenordnung, ausgebildet sein kann. Auf diese Weise kann eine würfelförmige Pflanzengruppe geschaffen werden.

Der Aufnahmebehälter 30 weist entsprechend der Anzahl der einzelnen Körper 2 entfernbare Deckel 9 auf, die, wie oben beschrieben, vom Aufnahmebehälter 30 zur Anzucht der Pflanzen entfernt werden können. In den Vertiefungen 4 der einzelnen Körper 2 können mit oder ohne Nährbodensubstrat 5 unterschiedliche Pflanzensamen 6, z.B. im ersten Körper 2 Sonnenblumensamen, im zweiten Körper 2 Asternsamen, im dritten Körper 2 Margeritensamen usw., oder auch dergleiche Pflanzensamen aufgenommen sein. Dies kann von der werbenden bzw. schenkenden Person, z.B. je nach Werbegruppe, bestimmt werden.

## Patentansprüche

1. Als Pflanzsystem ausgebildeter Geschenkartikel mit wenigstens einem aus einem wasserdichten Leichtmaterial bestehenden Körper (2), der mit einer von seiner Oberseite ausgehenden Vertiefung (4) zur Aufnahme von Nährbodensubstrat (5) und/oder Samen (6) versehen ist und der in einem seiner Form angepassten Aufnahmebehälter (3) aufgenommen ist, der einen entfernbaren Deckel (9) zum Abdecken der Vertiefung (4) und wenigstens eine äußere Fläche aufweist, die bedruckbar ausgebildet ist.

2. Als Pflanzsystem ausgebildeter Geschenkartikel nach Anspruch 1, **dadurch gekennzeichnet, dass** das Leichtmaterial geschäumter Kunststoff ist.

3. Als Planzsystem ausgebildeter Geschenkartikel nach Anspruch 1, **dadurch gekennzeichnet, dass** der entfernbare Deckel (9) als Abreißdeckel ausgebildet ist.

4. Als Pflanzsystem ausgebildeter Geschenkartikel nach einem der vorhergehenden Ansprüche, **dadurch gekennzeichnet, dass** die Vertiefung (4) im wesentlichen im mittleren Bereich in den Körper (2) und vorzugsweise bis zur halben der Höhe des Körpers (2) in diesen eingebracht ist.

5. Als Pflanzsystem ausgebildeter Geschenkartikel nach einem der vorhergehenden Ansprüche, **dadurch gekennzeichnet, dass** das in der Vertiefung (4) aufgenommene Nährbodensubstrat (5) als flacher, trockener Quellkörper ausgebildet ist, der eine Ausnehmung (7) zur Aufnahme des Samens (6) aufweist.

6. Als Pflanzsystem ausgebildeter Geschenkartikel nach Anspruch 5, **dadurch gekennzeichnet, dass** der Quellkörper (5) als tablettenförmiger Pressling aus Torf ausgebildet ist.

7. Als Pflanzsystem ausgebildeter Geschenkartikel nach Anspruch 5 oder 6, **dadurch gekennzeichnet, dass** das Nährbodensubstrat (5) auf der Bodenfläche der Vertiefung (4) befestigt ist.

8. Als Pflanzsystem ausgebildeter Geschenkartikel nach einem der Ansprüche 5 bis 7, **dadurch gekennzeichnet, dass** die Ausnehmung (7) zur Aufnahme des Samens (6) mittig im Nährbodensubstrat (5) vorgesehen ist.

9. Als Pflanzsystem ausgebildeter Geschenkartikel nach einem der vorhergehenden Ansprüche, **dadurch gekennzeichnet, dass** die äußere Form des Quellkörpers (5) und die Form der Vertiefung (4) geometrisch ähnlich sind.

10. Als Pflanzsystem ausgebildeter Geschenkartikel nach einem der vorhergehenden Ansprüche, **dadurch gekennzeichnet, dass** der Samen (6) in Form wenigstens eines Samenkorns in einem Band (8) eingearbeitet ist.

11. Als Pflanzsystem ausgebildeter Geschenkartikel nach Anspruch 10, **dadurch gekennzeichnet, dass** das den Samen (6) enthaltende Band (8) derart faltbar ist, dass es in der Ausnehmung (7) des Nährbodensubstrats (5) aufnehmbar ist.

12. Als Pflanzsystem ausgebildeter Geschenkartikel nach einem der vorhergehenden Ansprüche, **dadurch gekennzeichnet, dass** wenigstens zwei nebeneinander angeordnete Körper (2) im Aufnahmebehälter (3) aufgenommen sind, wobei der Aufnahmebehälter (3) wenigstens zwei entfernbare Deckel (9) zum Abdecken der den Körper (2) zugeordneten Vertiefungen (4) aufweist.

13. Als Pflanzsystem ausgebildeter Geschenkartikel nach einem der vorhergehenden Ansprüche, **dadurch gekennzeichnet, dass** der Aufnahmebehälter (3) als Faltschachtel ausgebildet ist, die vorzugsweise aus Karton oder Papier besteht.

14. Als Pflanzsystem ausgebildeter Geschenkartikel nach Anspruch 13, **dadurch gekennzeichnet, dass** der Aufnahmebehälter (3) auf allen sichtbaren Flächen eine bedruckbare Oberfläche aufweist.

15. Als Pflanzsystem ausgebildeter Geschenkartikel nach einem der vorhergehenden Ansprüche, **dadurch gekennzeichnet, dass** der Körper (2) und der Aufnahmebehälter (3) als geometrische Körper, insbesondere als Würfel oder Zylinder, ausgebildet sind.
